# EUROPEAN PATENT SPECIFICATION

(11) **EP 2 791 558 B1**
(45) Date of publication and mention of the grant of the patent: **25.04.2018**
(21) Application number: 12832745.9
(22) Date of filing: 19.12.2012
(51) Int. Cl.: F16K 1/38, F02M 26/23, F02M 26/28, F02M 26/41, F02M 26/52, F02M 26/66, F02M 26/68

(54) **MOTOR VEHICLE WITH AN EXHAUST GAS RECIRCULATION SYSTEM HAVING A POPPET VALVE**
KRAFTFAHRZEUG MIT EINEM ABGASRÜCKFÜHRUNGSSYSTEM BEINHALTEND EIN TELLERVENTIL
VEHICULE AUTOMOBILE AVEC UN CIRCUIT DE RECYCLAGE DES GAZ D'ECHAPPEMENT COMPRENANT UNE VANNE À CLAPET

(30) Priority: 15.12.2011 FR 1161718
(43) Date of publication of application: 22.10.2014
(73) Proprietor: Valeo Systèmes de Contrôle Moteur, 95800 Cergy (FR)
(72) Inventor: RIDOLFI, Gabriel, 27150 Hacqueville (FR); DUTOT, Antoine, 76960 Notre Dame De Bondeville (FR)
(74) Representative: Garcia, Christine
(86) International application number: PCT/KZ2012/000017
(87) International publication number: WO 2013/089540

(56) References cited:
- FR-A1- 2 892 792
- FR-A1- 2 892 793
- FR-A1- 2 892 794
- US-A1- 2011 017 934
- US-B2- 7 108 244

## Description

The present invention relates to a motor vehicle with an exhaust gas recirculation system (EGR) comprising a valve according to claim 1 as well as to a method for recycling exhaust gas of a heat engine of a motor vehicle according to claim 3.

### BACKGROUND OF THE INVENTION

A valve comprises, when it is for providing a high flow rate, a first duct, which admits exhaust gases into the valve, and a second duct which lets the gases out of the valve. The first duct is at right angles to the second duct and opens into a connecting portion where the second duct is connected to the first duct thereby defining an intersection that forms a seat for a valve disk that slides in the connecting portion of the second duct in a direction at right angles to the seat between a closed position in which the valve disk is pressed against the seat and a wide open position in which the valve disk is away from the seat. The valve disk is set in motion by means of an actuator moving it between its closed position and its open position in order to regulate the separation of the valve disk with respect to its seat and thus regulate the passage cross section for the exhaust gases, the wide open position allowing a maximum flow rate of exhaust gases through the valves.

Known valves for EGR-systems are disclosed by documents FR2892792, FR2892793, FR2892794 and by US2011/0017934.

### SUBJECT OF THE INVENTION

It is an object of the invention to provide a motor vehicle with an exhaust gas recirculation system with an economical valve that allows an improved permeability while at the same time having a relatively compact structure.

### BRIEF DESCRIPTION OF THE INVENTION

To this end, there is provided a motor vehicle with an exhaust gas recirculation circuit according to claim 1.

According to the invention, the gas flow across the valve tends to maintain the valve disk in the closed position and contributes to the action of the elastic spring mechanism. This enables to reduce the size of the spring mechanism, as well as the size of the means actuating the valve disk. The action of such means actuating the valve disk may thus be reduced while the valve disk is brought to the open position or while the valve disk is maintained in the open position. Moreover, the arrangement of the valve disk, the first duct and the second duct enables the gas flow to take the shortest path between the inlet and the outlet of the valve, improving its permeability by limiting the nuisance entailed by the valve disk being there.

The inventors have surprisingly realized that, in such a valve, providing an opening against the gas flow does not cause the usual disturbances and pressure drops linked to the fact that the flow has to bypass the valve disk to reach the outlet.

In such a valve, the valve disk may comprise an annular edge with a bevel, such an edge being for bearing against an edge of the seat having a complementary shape.

The invention also provide a method for recycling exhaust gas of a heat engine of a motor vehicle according to claim 3 thanks to at least one valve comprising a body defining a first duct opening into a second duct thereby defining an intersection that forms a seat at right angles to the second duct, a valve disk that slides in the first duct at right angles to the seat between a closed position and an open position in which the valve disk lies into close proximity to a wall of the first duct lying facing the seat, the valve comprising means of actuating the valve disk to its open position and an elastic spring mechanism bringing the valve disk to its closed position,
in which method:
- the first duct is connected to an exhaust pipe, where appropriate via a heat exchanger, and
- the second duct is directly or indirectly connected to an intake pipe.
Other features and advantages of the invention will become apparent from reading the description which follows of one nonlimiting particular embodiment of the invention.

### BRIEF DESCRIPTION OF THE DRAWINGS

Reference will be made to the attached drawings among which:
- figure 1 is a schematic view of the valve of the motor vehicle according to the invention in longitudinal section on I-I of figure 2;
- figure 2 is a schematic view of the valve showing, from below in section on II-II of figure 1, the internal contour of the second duct and the contour of the seat;
- figure 3 is a perspective view showing, as hidden detail, the internal contours of the valve,
- figure 4 is a schematic view of a heat engine provided with an exhaust gas recirculation circuit comprising a valve of the motor vehicle according to the invention.

### DETAILED DESCRIPTION OF THE INVENTION

With reference to the figures, the valve denoted overall as 100 comprises a first duct 1 intended to be connected to a gas inlet pipe and a second duct 2 which runs at right angles to the duct 1 and is intended to be connected to a gas discharge pipe.

The duct 1 has a connecting portion 3 where it connects to the duct 2. The connecting portion 3 comprises two flat walls 4, 5 facing one another and connected by an end wall 6. The duct 2 opens into the connecting portion 3 via the flat wall 4 thereby defining an intersection that forms a seat 7 for a valve disk 8. The valve disk 8 is housed in the connecting portion and is secured to an actuating stem 9 slideably housed in a bore 10 formed in the flat wall 5. The bore 10 runs facing the seat 7 at right angles thereto and opens into the connecting portion 3. The actuating stem 9 is connected on the one hand to an actuator 12 and to elastic spring mechanism on the other end, all these elements being fixed to the outside of the duct 1.

The valve disk 8 has, facing the seat 7, a deviation surface 13 formed of a surface of revolution with a curved generatrix in this instance in the shape of an arc of a circle. The deviation surface 13 thus has a curvilinear profile with a narrow base 14 facing toward the seat 7 and widening away from the seat 7 as far as a peripheral edge 15 of the valve disk 8. At the peripheral edge 15, the generatrix runs tangential to a plane perpendicular to the direction of sliding in order to merge with this plane. The base 14 is formed by the flat end of the actuating stem 9 at the opposite end to the actuator 12 which passes through the valve disk 8 and is welded thereto at the base 14. The valve disk 8 has, on the opposite side to the seat 7, a flat rear face 16 projecting from the center of which there extends a boss 11.

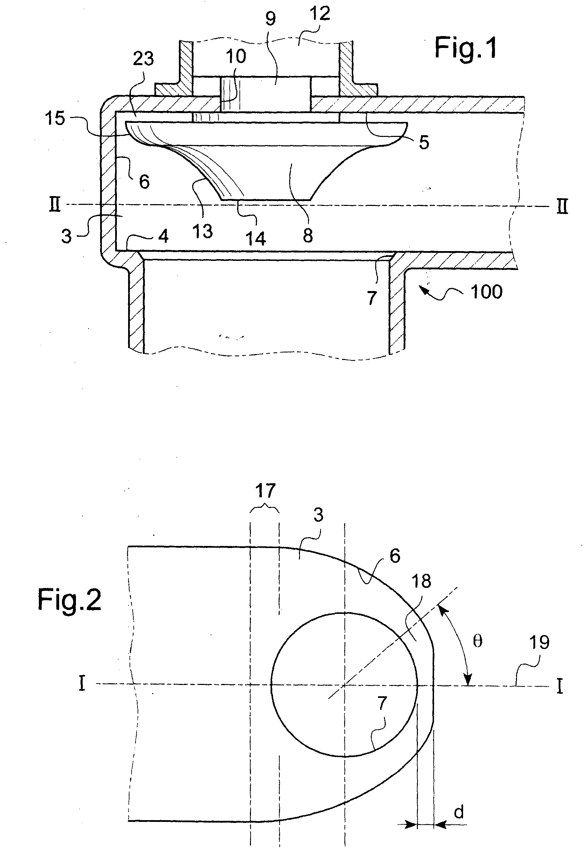

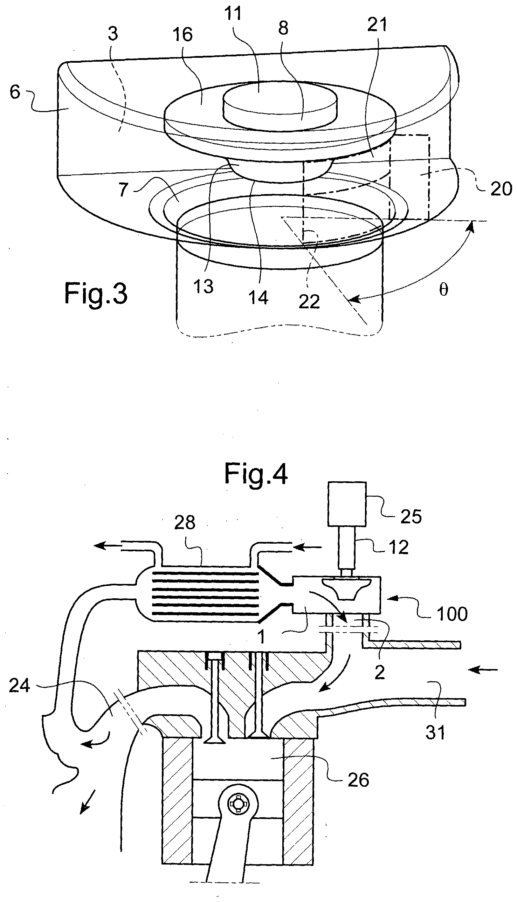

The end wall 6 of the connecting portion 3 partially surrounds the valve disk 8 parallel to the direction in which the valve disk 8 slides and meets the remainder of the duct 1 in a connecting region 17. The end wall 6 is separated from the peripheral edge 15 by a distance, the purpose of which is explained in relation to the way in which the valve operates which is given in the remainder of the description.
The actuator 12 thus controls the sliding of the valve disk 8 in a direction at right angles to the seat 7 from a fully closed position in which the valve disk 8 is pressed against the seat 7 to an open position , depicted in figure 1, or position of maximum lift of the valve disk 8, in which position the valve disk 8 is separated from the seat 7 and the peripheral edge 15 defines with the seat 7 in line therewith a theoretical maximum passage cross section for the gases, this being depicted in fine chain line in figure 3 and referenced 22.

On the contrary, the elastic spring mechanism causes the valve disk 8 to slide from the open position to the closed position, the gas flow contributing to the action of the elastic spring mechanism at least when the valve disk lies into close proximity to its closed position. The elastic spring mechanism are nonetheless sized so as to maintain the valve disk in the closed position in the absence of gas flow.

In the wide open position, the actuator 12 is controlled in such a way that the valve disk 8 lies in close proximity to the wall 5. This makes it possible to prevent any gases from flowing behind the valve disk 8 and giving rise to turbulence that would disrupt the flow of the gases upstream of the valve disk. In this position, the valve disk here is closer to the wall 5 than to the valve seat. The space left for the gases to flow between the valve disk and its seat is thus greater than the space left between the valve disk and the wall 5. This then encourages gases to pass between the valve disk and its seat. More specifically, in the wide open position, the boss 11 of the valve disk 8 bears against the wall 5 in such a way that a narrow space 13 is left between the wall 5 and the valve disk 8. As the boss 11 rests against the wall 5, the valve disk 8 closes off the bore 10 and prevents any particles and dirt carried by the gases from entering the bore 10 and adversely affecting the ease with which the stem 9 slides. The space 13 left between the valve disk 8 and the wall 5 makes it possible to avoid any suction effect that might counter the return of the valve disk 8 from its wide open position to its fully closed position. The fact that the valve disk 8 bears against the wall 5 over a small surface area limits the stresses that bearing over a large surface area could introduce into the connection between the stem 9 and the valve disk 8 if the stem 9 and the valve disk 8 were not exactly perpendicular or if the wall 5 or the rear face 16 were to exhibit flatness defects.

The purpose of the deviation surface 13 is to deflect at right angles to the duct 2 a gaseous stream originating therefrom. The guidance of the gaseous stream by the deviation surface limits the onset of turbulence in the gaseous stream as this stream travels from the first duct to the second duct and improves the flow rate through the valve. The shape of the deviation surface 13 as a surface of revolution with a curved generatrix makes the valve disk easier to produce. Having the generatrix shaped as an arc of a circle combines simplicity of production with effectiveness.

The end wall 6 of the connecting portion 3 is separated from the peripheral edge 15 by a distance such that, for the wide open position, the end wall 6 defines with the peripheral edge 15 of the valve disk 8 and the seat 7 a passage 18, the cross section of which increases from a median axis 19 of the end wall 6 toward the connecting region 17. More specifically, the end wall 6 is designed in such a way that, for any angular sector θ defined between the median axis 19 and any arbitrary point on the end wall 6, the passage cross section 20 locally defined between the end wall 6, the peripheral edge 15 and the seat 7 in the vicinity of this point is at least equal to an effective passage cross section 21 locally defined in line with the seat 7 between the peripheral edge 15 and the seat 7 in the angular sector concerned. The effective passage cross section 21 is equal to approximately half the theoretical maximum passage cross section 22 locally defined in the angular sector concerned.

The passage cross section 20 is at least equal to the effective passage cross section 21 modified by a coefficient k greater than 1 and dependent on the angular sector θ concerned.

In this instance, the coefficient k is equal to π divided by the angle θ in radians (π/θ). Thus, for θ = π/4, the cross section 20 is equal to four times the cross section 21. For θ angle values close to zero, the end wall 6 is straight and separated from the valve disk 8 by a distance d at the median axis 19 such that the cross section 20 is greater than the cross section 21 even for small values of θ. The θ-dependent coefficient makes it possible to take into consideration the local flow rate of exhaust gases which increases as θ increases.
With such an arrangement, the valve does not need to incorporate an oversized elastic spring mechanism, which enables to use a spring mechanism and an actuator that have compact structures.

Moreover, the arrangement of the valve makes it possible for the gas flow to take the shortest path between the inlet and the outlet of the valve, thus improving its permeability. Referring to Figure 4, such a valve 100 is frequently used in an exhaust gas recirculation (EGR) circuit of a heat engine, the first duct 1 being connected to an exhaust pipe 24, where appropriate via a heat exchanger 28, and the second duct 2 being directly or indirectly connected to an intake pipe 31.

Thus some of the exhaust gas from a combustion chamber 26 of the heat engine are deflected towards the heat exchanger 28 that is for cooling gas. Once they are cooled, the gas move towards the valve 100 that regulates the amount of gas that is to be injected into the intake pipe 31 thanks to an ECU 25 connected to the actuator 12. Clean gaz coming from the intake pipe 31 and recycled gas coming from the valve 100 are mixed, and this mixture is then injected into the combustion chamber 26, enabling a new actuating cycle to be performed.
Of course, the invention is not restricted to the embodiment described but encompasses any alternative forms of embodiment that fall within the scope of the invention as defined by the claims.

The stop means for arresting the valve disk in the open position may be formed of a boss projecting from the flat wall 5.

In general, the cross section 20 may be equal to k times the cross section 21 with 1 ≤ k ≤ π/θ for θ varying between 0 and 2π/3 approximately on either side of the median axis 19. Other sizes are nevertheless possible.

The combination of the shape of the first duct, the deviation surface of the valve disk and the way it is positioned in the open position are an optimum solution for maximizing the flow rate through the valve, but may be arranged in a different way according to the invention as defined in the claims. At last, a heat engine incorporating the exhaust gas recirculation circuit shown in Figure 4 may incorporate additional components, such as a compressor located upstream of the combustion chamber, a catalytic converter located downstream of the combustion chamber or any other device improving the operation of the engine.

In turbocharged engines, the exhaust gas recirculation circuit may be connected to the exhaust pipe upstream or downstream of the turbine and to the intake pipe upstream or downstream of the compressor.

## Claims

1. Motor vehicle comprising an exhaust gas recirculation circuit, the exhaust gas recirculation circuit comprising:
- at least one valve (100) comprising a body defining a first duct (1) opening into a second duct (2) thereby defining an intersection that forms a seat (7) at right angles to the second duct (2), a valve disk (8) that slides in the first duct (1) at right angles to the seat(7) between a closed position and an open position in which the valve disk (8) lies into close proximity to a wall (5) of the first duct (1) lying facing the seat (7), the valve (100) comprising means of actuating (12) the valve disk (8) from its closed position to its open position and an elastic spring mechanism bringing the valve disk (8) to its closed position,
- an exhaust pipe connected to the first duct (1) of the valve (100),
- an intake pipe connected to the second duct (2) of the valve (100),
the circuit being arranged to define a flow direction for a gas flow from the first duct (1) to the second duct (2) in such a manner as the gas flow tends to bring the valve disk (8) in the closed position at least when the valve disk (8) lies into close proximity to its closed position.

2. Motor vehicle as claimed in claim 1, in which the valve disk (8) of the valve (100) comprises an annular edge (15) with a bevel, such an edge being for bearing against an edge of the seat (7) having a complementary shape.

3. Method for recycling exhaust gas of a heat engine of a motor vehicle thanks to:
- at least one valve (100) comprising a body defining a first duct (1) opening into a second duct (2) thereby defining an intersection that forms a seat (7) at right angles to the second duct (2), a valve disk (8) that slides in the first duct (1) at right angles to the seat(7) between a closed position and an open position in which the valve disk (8) lies into close proximity to a wall (5) of the first duct (1) lying facing the seat (7), the valve (100) comprising means of actuating (12) the valve disk (8) from its closed position to its open position and an elastic spring mechanism bringing the valve disk (8) to its closed position,
in which method:
- the first duct (1) of the valve (100) is connected to an exhaust pipe, where appropriate via a heat exchanger (28), and
- the second duct (2) is directly or indirectly connected to an intake pipe (31).

## Patentansprüche

1. Kraftfahrzeug, aufweisend einen Abgasrückführungskreis, wobei der Abgasrückführungskreis aufweist:
- mindestens ein Ventil (100), aufweisend einen Körper, welcher einen ersten Kanal (1) definiert, welcher in einen zweiten Kanal (2) mündet und dadurch einen Kreuzungspunkt definiert, welcher einen Sitz (7) rechtwinkelig zu dem zweiten Kanal (2) bildet; einen Ventilteller (8), welche in dem ersten Kanal (1) rechtwinkelig zu dem Sitz (7) zwischen einer geschlossenen Stellung und einer offenen Stellung gleitet, in welcher der Ventilteller (8) in nächster Nähe zu einer Wand (5) des ersten Kanals (1) liegt, welche dem Sitz (7) zugewandt liegt, wobei das Ventil (100) Mittel zur Betätigung (12) des Ventiltellers (8) aus seiner geschlossenen Stellung in seine offene Stellung und einen elastischen Federmechanismus aufweist, welcher den Ventilteller (8) in seine geschlossene Stellung bringt,
- ein Abgasrohr, welches mit dem ersten Kanal (1) des Ventils (100) verbunden ist,
- ein Einlassrohr, welches mit dem zweiten Kanal (2) des Ventils (100) verbunden ist,
wobei der Kreis dafür eingerichtet ist, um eine Stromrichtung für einen Gasstrom aus dem ersten Kanal (1) in den zweiten Kanal (2) in einer solchen Weise zu definieren, dass der Gasstrom dazu neigt, den Ventilteller (8) in die geschlossene Stellung zu bringen, zumindest wenn der Ventilteller (8) in nächster Nähe zu seiner geschlossenen Stellung liegt.

2. Kraftfahrzeug nach Anspruch 1, bei welchem der Ventilteller (8) des Ventils (100) einen ringförmigen Rand (15) mit einer Fase aufweist, wobei ein solcher Rand dazu dient, an einem Rand des Sitzes (7) mit einer komplementären Form anzuliegen.

3. Verfahren zur Abgasrückführung eines Verbrennungsmotors eines Kraftfahrzeugs Dank:
- mindestens eines Ventils (100), aufweisend einen Körper, welcher einen ersten Kanal (1) definiert, welcher in einen zweiten Kanal (2) mündet und dadurch einen Kreuzungspunkt definiert, welcher einen Sitz (7) rechtwinkelig zu dem zweiten Kanal (2) bildet; einen Ventilteller (8), welche in dem ersten Kanal (1) rechtwinkelig zu dem Sitz (7) zwischen einer geschlossenen Stellung und einer offenen Stellung gleitet, in welcher der Ventilteller (8) in nächster Nähe zu einer Wand (5) des ersten Kanals (1) liegt, welche dem Sitz (7) zugewandt liegt, wobei das Ventil (100) Mittel zur Betätigung (12) des Ventiltellers (8) aus seiner geschlossenen Stellung in seine offene Stellung und einen elastischen Federmechanismus aufweist, welcher den Ventilteller (8) in seine geschlossene Stellung bringt, bei welchem Verfahren:
- der erste Kanal (1) des Ventils (100) mit einem Abgasrohr verbunden wird, gegebenenfalls über einen Wärmetauscher (28), und
- der zweite Kanal (2) direkt oder indirekt mit einem Einlassrohr (31) verbunden wird.

## Revendications

1. Véhicule automobile comprenant un circuit de recirculation des gaz d'échappement, le circuit de recirculation des gaz d'échappement comprenant :
- au moins une vanne (100) comprenant un corps définissant un premier conduit (1) ouvrant sur un deuxième conduit (2) pour définir ainsi une intersection qui forme un siège (7) à angle droit par rapport au deuxième conduit (2), un clapet (8) qui coulisse dans le premier conduit (1) à angle droit par rapport au siège (7) entre une position fermée et une position ouverte dans laquelle le clapet (8) est situé à proximité immédiate d'une paroi (5) du premier conduit (1) en regard du siège (7), la vanne (100) comprenant des moyens (12) pour actionner le clapet (8) de sa position fermée dans sa position ouverte et un mécanisme de ressort élastique ramenant le clapet (8) dans sa position fermée,
- un tuyau d'échappement connecté au premier conduit (1) de la vanne (100),
- un tuyau d'admission connecté au deuxième conduit (2) de la vanne (100),
le circuit étant prévu pour définir une direction d'écoulement pour un écoulement de gaz depuis le premier conduit (1) jusqu'au deuxième conduit (2) de manière à ce que l'écoulement de gaz ait tendance à ramener le clapet (8) dans la position fermée au moins lorsque le clapet (8) est situé à proximité immédiate de sa position fermée.

2. Véhicule automobile selon la revendication 1, dans lequel le clapet (8) de la vanne(100) comprend un bord annulaire (15) avec un biseau, un tel bord servant à presser contre un bord du siège (7) ayant une forme complémentaire.

3. Procédé pour recycler des gaz d'échappement d'un moteur thermique d'un véhicule automobile grâce à
- au moins une vanne (100) comprenant un corps définissant un premier conduit (1) ouvrant sur un deuxième conduit (2) pour définir ainsi une intersection qui forme un siège (7) à angle droit par rapport au deuxième conduit (2), un clapet (8) qui coulisse dans le premier conduit (1) à angle droit par rapport au siège (7) entre une position fermée et une position ouverte dans laquelle le clapet (8) est situé à proximité immédiate d'une paroi (5) du premier conduit (1) en regard du siège (7), la vanne (100) comprenant des moyens (12) pour actionner le clapet (8) de sa position fermée dans sa position ouverte et un mécanisme de ressort élastique ramenant le clapet (8) dans sa position fermée,
dans lequel procédé :
- le premier conduit (1) de la vanne (100) est connecté à un tuyau d'échappement, le cas échéant par le biais d'un échangeur de chaleur (28), et
- le deuxième conduit (2) est directement ou indirectement connecté à un tuyau d'admission (31) .
